Europäisches Patentamt

European Patent Office

Office européen des brevets

(19)

(11) Veröffentlichungsnummer: **0 226 821**
**B1**

(12) **EUROPÄISCHE PATENTSCHRIFT**

(45) Veröffentlichungstag der Patentschrift:
11.07.90

(51) Int. Cl.⁵: **G01S 7/52,** G01S 15/89,
G10K 11/34

(21) Anmeldenummer: 86116010.9

(22) Anmeldetag: 18.11.86

(54) Ultraschallgerät mit dynamischer Veränderung der Empfangsfokusanlage.

(30) Priorität: 02.12.85 DE 3542562
31.01.86 DE 3603042

(43) Veröffentlichungstag der Anmeldung:
01.07.87 Patentblatt 87/27

(45) Bekanntmachung des Hinweises auf die Patenterteilung:
11.07.90 Patentblatt 90/28

(84) Benannte Vertragsstaaten:
AT CH DE FR LI NL

(56) Entgegenhaltungen:
EP-A- 0 005 432
GB-A- 2 148 005
GB-A- 2 153 528
US-A- 4 173 007
US-A- 4 234 940
US-A- 4 305 296
US-A- 4 331 158
US-A- 4 351 038

(73) Patentinhaber: Siemens Aktiengesellschaft,
Wittelsbacherplatz 2, D-8000 München 2(DE)

(72) Erfinder: Moeller, Reiner, Dipl.-Ing. (FH),
Zeppelinstrasse 67, D-8520 Erlangen(DE)
Erfinder: Hetzel, Gert, Dipl.-Ing., Grundherrstrasse 24,
D-8520 Erlangen(DE)
Erfinder: Saugeon, Ulrich, Dipl.-Ing.,
Weltenburgerstrasse 175, D-8500 Nürnberg 60(DE)
Erfinder: Boheim, Gustav, Dipl.-Ing., Wiesenstrasse 8,
D-8502 Zirndorf 6(DE)
Erfinder: Zurinski, Viktor, Dipl.-Ing., Falkenstrasse 18,
D-8520 Erlangen(DE)

## Beschreibung

Die Erfindung betrifft ein Ultraschallgerät zur dynamischen Veränderung der Empfangsfokuslage einer vorgebbaren Anzahl an Ultraschall-Wandlerelementen, wobei jedem Ultraschall-Wandlerelement ein Empfangskanal mit einer Zeitverzögerungsschaltung für das empfangene Ultraschall-Echosignal nachgeschaltet ist, und wobei die Zeitverzögerungsschaltung zur Umschaltung zwischen verschiedenen vorgegebenen Zeitverzögerungswerten mit einer Steuereinrichtung verbunden ist. Ultraschallgeräte dieser Art sind auf dem Markt erhältlich und beispielsweise aus US-A 4 351 038, US-A 4 173 007 oder GB-A 2 153 528 bekannt.

In der Ultraschalluntersuchungstechnik ist es üblich, eine Veränderung der Empfangsfokuslage eines Ultraschall-Arrays (Ultraschallantenne) auf dem Wege der sogenannten elektronischen Fokussierung zu erreichen. Dazu werden die empfangenen Echosignale für jedes Wandlerelement oder für eine Gruppe von Wandlerelementen des Ultraschall-Arrays unterschiedlich verzögert. Auf diese Weise wird eine gekrümmte Empfangslinie simuliert, welche entsprechend der Stärke der Krümmung unterschiedliche Foki aufweist. Bei Phased-Array-Geräten wird nicht nur fokussiert, sondern zusätzlich auch noch eine Änderung der Abstrahlrichtung durchgeführt. Dieser sogenannte Schwenk wird ebenfalls über eine elektronische Zeitverzögerung bewirkt.

Beim dynamischen Fokussieren wird ein Ultraschallsignal ausgesendet, und anschließend werden die reflektierten Ultraschall-Echos bei nacheinander eingestellten Fokuslagen empfangen. Bei den Phased-Array-Geräten oder bei vielkanaligen, großen Antennen besteht der Wunsch, während des Empfangs einer Ultraschallzeile, also dynamisch die Empfangsfokuslage recht häufig umschalten zu können. Bei einer großen Antenne mit Aperturkorrektur sollen z. B. 10 Fokuslagen pro Ultraschallzeile erreicht werden. Bei Phased-Array-Geräten wird in der Regel mit der gesamten Antenne gearbeitet. Hier können noch mehr als 10 Fokuslagen pro Ultraschallzeile gewünscht sein.

Werden die Fokuslagen während des Empfangs der Ultraschall-Echosignale mittels einer Umschalteinrichtung schnell umgeschaltet, z. B. mit konventionellen Analogschaltern, so treten von diesen Schaltern her beim Umschalten Spikes oder Schaltknackse auf. Dieses führt, insbesondere wenn eine tiefenabhängige Verstärkungseinrichtung im Empfangskanal hinter der Umschalteinrichtung liegt, zu Bildstörungen.

Ein weiterer Nachteil entsteht, wenn das Umschalten zwischen den Fokuslagen zu abrupt erfolgt. Dann nämlich sieht man auf dem Bildschirm die Grenzflächen zwischen den Fokuslagen durch unterschiedliche Darstellung der Echofeinstruktur hervorgerufen durch Abbruchfehler.

Um ein abruptes Umschalten zu vermeiden, ging man bereits bei Ultraschall-Geräten mit linearem Array dazu über, die Fokuslagen "weich", d. h. z. B. innerhalb von 10 μs, überzublenden. Diese Vorgehensweise ist bei wenigen Fokuslagen sinnvoll, z. B. bei drei Fokuslagen während des Empfangs der Ultraschallzeile. Der Überblendbereich ist dann nämlich kurz gegenüber den Wirkungsbereichen der einzelnen Fokuslagen. Beim Umschalten entstehen daher wenig höherfrequente Anteile, die das Nutzsignal verfälschen können. Außerdem ist der Umschaltaufwand bei wenigen Verarbeitungskanälen wirtschaftlich zu vertreten. Die Anzahl der für das "weiche" Umschalten erforderlichen Überblendelemente bestimmt sich aus der Empfangskanalzahl multipliziert mit der Anzahl der Fokuslagen. Unter dem genannten Wirkungsbereich einer Fokuslage wird die Zeit verstanden, bei welcher das Array eine konstante, elektronische Krümmung aufweist.

Bei Phased-Array-Geräten oder bei großen Empfangs-Antennen mit vielen Fokuslagen ist diese Vorgehensweise jedoch nicht mehr sinnvoll. Der Wirkungsbereich der einzelnen Fokuslagen liegt dann in der Nähe der Umschaltzeit, so daß im Extremfall nur noch umgeschaltet wird und die Ultraschall-Echosignale nicht mehr innerhalb eines konstanten Wirkungsbereiches empfangen werden.

Die Erfindung geht aus von der Überlegung, daß es zweckmäßig ist, den Wirkungsbereich der Fokuslagen auch bei Ultraschall-Geräten mit vielen Fokuslagen zu erhalten.

Aufgabe der Erfindung ist es daher, bei einem Ultraschall-Gerät der eingangs genannten Art bei dynamischer Fokussierung mit vertretbarem Aufwand kurze Umschaltzeiten zu erzielen, ohne daß das Frequenzspektrum, das durch den jeweiligen Umschaltvorgang hervorgerufen wird, nennenswert im Frequenzband der empfangenen Ultraschall-Echosignale liegt und daher zu Bildstörungen führt.

Diese Aufgabe wird erfindungsgemäß dadurch gelöst, daß zumindest ein Teil der Zeitverzögerungsschaltung doppelt vorgesehen ist, so daß eine erste und eine zweite Teilschaltung zur Bildung des zeitverzögerten Ultraschall-Echosignals vorliegen, und daß eine Überblendschaltung vorgesehen ist, die dafür sorgt, daß

a) die zweite Teilschaltung jeweils dann im Empfangskanal eingeblendet ist, wenn die erste, sich im ausgeblendeten Zustand befindliche Teilschaltung von der Steuereinrichtung auf einen anderen Zeitverzögerungswert umgeschaltet wird, und

b) die erste Teilschaltung jeweils dann im Empfangskanal eingeblendet ist, wenn die zweite, sich im ausgeblendeten Zustand befindliche Teilschaltung von der Steuereinrichtung auf einen anderen Zeitverzögerungswert umgeschaltet wird.

Durch diese Maßnahme wird erreicht, daß die Steuereinrichtung die Umschaltung auf einen anderen vorgegebenen Zeitverzögerungswert, also zu einer anderen Fokuslage, vornehmen kann, ohne daß der Empfang der Echosignale beeinflußt wird. Als wesentlicher Vorteil ergibt sich somit, daß die Übertragung von Schaltknacksen auf die Nutzechosignale vermieden wird. Dadurch, daß die Umschaltung auf eine andere Fokuslage jeweils in der gerade nichtaktivierten oder "ausgeblendeten" Teilschaltung vorgenommen wird, also während diese nicht in den Empfangskanal eingeblendet ist, können durch die Umschaltung hervorgerufene Schaltknackse den Empfangskanal nicht beeinflussen. Dieses Eleminieren der Schaltknackse war bislang nur unter Inkaufnahme doppelter Aufnahmezeit zu erzielen. Die doppelte Aufnahmezeit kam dadurch zustande, daß zwei gleiche Ultraschallzeilen mit unterschiedlicher Lage der Schaltzeitpunkte für die Fokusumschaltung aufgenommen wurden und anschließend nur diejenigen Bilddaten aus beiden Ultraschallzeilen zur Zusammensetzung einer resultierenden ungestörten Ultraschallzeile herangezogen wurden, bei denen Schaltknackse keinen Einfluß auf das Echosignal hatten.

Durch geeignete Wahl der Überblendschaltung kann die Überblendzeit so gekürzt werden, daß der eigentliche Wirkungsbereich der einzelnen Fokuslagen nicht verloren geht. Es sind Umschaltzeiten zwischen 1 bis 5 µs möglich.

Des weiteren ermöglicht der Einsatz einer "weichen" Umschaltfunktion in der Überblendschaltung eine Reduzierung von Abbruchfehlern im Ultraschall-Echosignal, die bei schnellem Schalten durch die Umblendschaltung in den Empfangskanal gelangen.

Eine besonders einfache, kostengünstige Ausführungsform mit geringem Platzbedarf zeichnet sich dadurch aus, daß die erste und die zweite Teilschaltung eine erste bzw. zweite aufsummierende Verzögerungsleitung mit jeweils mehreren Eingängen aufweist, wobei jedem Eingang eine vorgegebene Verzögerungszeit zugeordnet ist, daß jeder Empfangskanal aus einer vorbestimmten Anzahl an Empfangskanälen nach Wahl mit einem beliebigen Eingang der beiden Verzögerungsleitungen verbindbar ist, so daß am Ausgang jeder der beiden Verzögerungsleitungen die Ultraschall-Echosignale der vorbestimmten Empfangskanäle nach der Zeitverzögerung als ein Ultraschall-Summensignal zur Verfügung stehen, und daß jeweils das Ultraschall-Summensignal der ersten und zweiten Teilschaltung der Überblendschaltung zugeführt ist.

Durch diese Maßnahme wird erreicht, daß nicht für jeden einzelnen Ultraschall-Empfangskanal zwei eigene Teilschaltungen vorgesehen sein müssen. Es lassen sich, wie später in einem Ausführungsbeispiel dargelegt wird, z. B. vier Empfangskanäle mit einer aufsummierenden Verzögerungsleitung verknüpfen; dann kann jeweils spikefrei von dem Ultraschall-Summensignal der einen Teilschaltung auf das Ultraschall-Summensignal der anderen Teilschaltung übergeblendet werden, und umgekehrt. Der Aufwand (doppelte Teilschaltung) pro Empfangskanal reduziert sich also auf denselben Aufwand (doppelte Teilschaltung) für nunmehr z. B. vier Empfangskanäle. Die Vorteile des spikefreien Überblendens von einer Fokuslage in die nächste bleiben dabei voll erhalten.

Bei dieser letztgenannten Ausführungsform wiederum ist es besonders vorteilhaft, wenn so vorgegangen wird, daß das Ultraschall-Summensignal der ersten Verzögerungsleitung auf einen ersten Analog-Digital-Wandler geführt ist, daß das Ultraschall-Summensignal der zweiten Verzögerungsleitung auf einen zweiten Analog-Digital-Wandler geführt ist, und daß der Ausgang des ersten und des zweiten Analog-Digital-Wandlers an den ersten bzw. zweiten Eingang eines Digital-Multiplexers geschaltet ist, so daß die beiden Analog-Digital-Wandler und der digitale Multiplexer die Überblendschaltung bilden.

Weitere Vorteile und Ausgestaltungen der Erfindung ergeben sich aus der Beschreibung der Ausführungsbeispiele anhand der Figuren in Verbindung mit den Unteransprüchen. Es zeigen:

Fig. 1 ein erstes Ausführungsbeispiel einer Zeitverzögerungsschaltung mit zwei Teilschaltungen für ein Ultraschall-Gerät;

Fig. 2 ein zweites Ausführungsbeispiel einer solchen Zeitverzögerungsschaltung;

Fig. 3 die Anwendung der dynamischen Fokussierung bei einem Phased-Array-Gerät unter Verwendung von Zeitverzögerungsschaltungen mit jeweils zwei Teilschaltungen;

Fig. 4 ein weiteres Anwendungsbeispiel mit jeweils zwei Teilschaltungen für ein Phased-Array-Gerät;

Fig. 5 ein Ausführungsbeispiel für eine Überblendschaltung;

Fig. 6 die Darstellung von Funktionsverläufen zur Erläuterung der Arbeitsweise der Überblendschaltung von Fig. 5;

Fig. 7 ein bevorzugtes Ausführungsbeispiel einer Zeitverzögerungsschaltung für vier Ultraschall-Empfangskanäle mit zwei Teilschaltungen;

Fig. 8 eine Überblendschaltung mit einem schnellen Schalter und einem Analog-Digital-Wandler; und

Fig. 9 eine Überblendschaltung mit zwei über spezielle Umschaltfunktionen steuerbare Abschwächer.

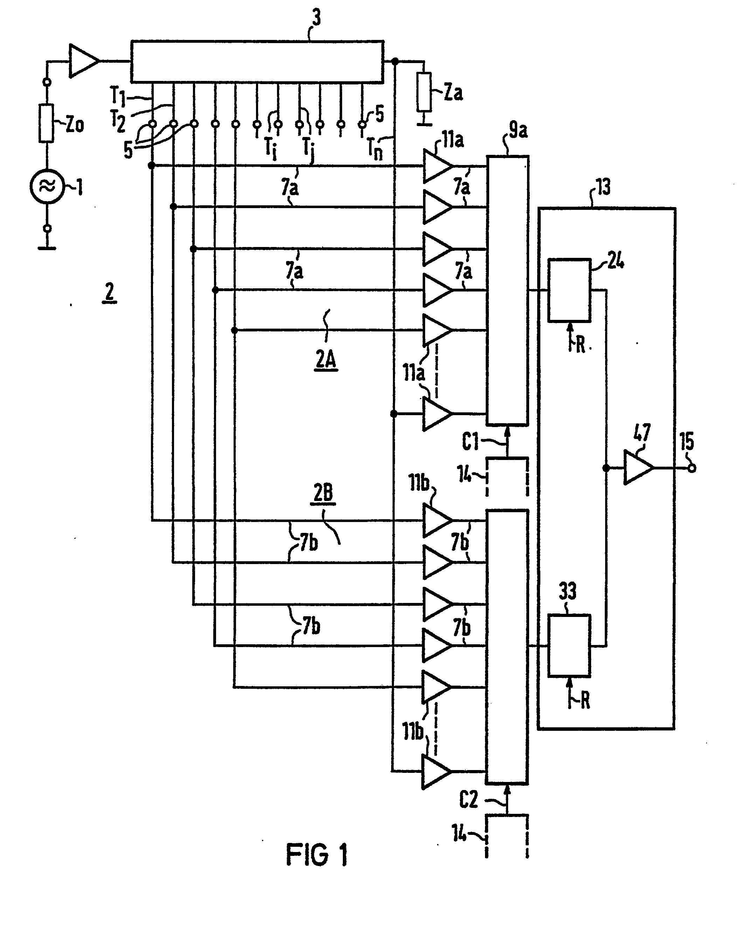

In Fig. 1 ist ein einziges, an Masse gelegtes Ultraschall-Wandlerelement 1 eines Ultraschall-Arrays als Signalquelle für ein Ultraschall-Echosignal dargestellt. Die Signalquelle hat einen Innenwiderstand Zo. Das Ultraschall-Echosignal wird über einen Trennverstärker einer Zeitverzögerungsschaltung 2 mit einer Verzögerungsleitung 3 zugeführt, welche eine Anzahl von Abgriffen 5 aufweist. An aufeinanderfolgenden Abgriffen 5 ist jeweils das Ultraschall-Echosignal um eine Zeitverzögerung $T = T_j - T_i$ verzögert abzunehmen. Die Zeitverzögerungen sind dabei mit $T_1, T_2, ... T_i, T_j ... T_n$ bezeichnet. Die Feinheit der Zeitverzögerung T wird durch die Anzahl n der Abgriffe 5 bestimmt. Bei großen Arrays oder Antennen beträgt diese Anzahl n z. B. n = 10, bei Phased-Array-Geräten kann eine Zahl bis zu n = 64 sinnvoll sein. Das Ende der Verzögerungsleitung 3 (maximale Zeitverzögerung $T_n$) ist über einen Abschlußwiderstand Za an HF-Masse gelegt. Der Abschlußwiderstand Za besitzt den gleichen Widerstandswert wie der Ausgangswiderstand des vorgeschalteten Trennverstärkers.

Von jedem Abgriff 5 führt eine erste Verbindungsleitung 7a zu einem der n Eingänge eines ersten Multiplexers 9a. In jeder Verbindungsleitung 7a ist ein erster Trennverstärker 11a zwischengeschaltet, welcher verhindert, daß beim Umschalten des Multiplexers 9a Schaltknackse in Richtung der Verzögerungsleitung 3 laufen. Dieser Trennverstärker hat außerdem noch die Aufgabe, das Signal hochohmig von der Verzögerungsleitung abzunehmen. Der erste Multiplexer 9a hat also an seiner Eingangsseite entsprechend der Zahl n der Abgriffe 5 insgesamt n Eingänge. Die Ausgangsseite des Multiplexers 9a ist an den ersten Eingang einer Überblendschaltung 13 gelegt.

An jeden Abgriff 5 ist eine zweite Verbindungsleitung 7b gelegt, die zu einem der n Eingänge an der Eingangsseite eines zweiten Multiplexers 9b führt. In jeder Verbindungsleitung 7b ist entsprechend ein zweiter Trennverstärker 11b angeordnet, welcher verhindert, daß Schaltknackse, die beim Umschalten des zweiten Multiplexers 9b entstehen, zur Verzögerungsleitung 3 gelangen. Die Ausgangsseite des zweiten Multiplexers 9b ist mit dem zweiten Eingang der Überblendschaltung 13 verbunden. Die Überblendschaltung 13 weist einen Ausgang 15 auf, an welchem das zeitverzögerte Ultraschall-Echosignal zur weiteren Verarbeitung zur Verfügung steht.

Die Multiplexer 9a, 9b sind mit einer Steuereinrichtung 14 verbunden, die mittels zweier Steuersignale C1, C2 jeweils einen Eingang der Eingangsseite an den Ausgang des betreffenden Multiplexers 9a, 9b durchschaltet. Diese Vorgehensweise ist beispielsweise aus der US-PS 4,208,916 bekannt. Die Multiplexer 9a, 9b werden, das muß besonders betont werden, hier wechselweise von der Steuereinrichtung 14 auf Durchschaltung nach vorgegebenem Muster angesteuert, d. h. aktiviert.

In diesem Ausführungsbeispiel bilden die Verzögerungsleitung 3, die ersten Verbindungsleitungen 7a, die ersten Trennverstärker 11a und der erste Multiplexer 9a eine erste Teilschaltung 2A, die an die Überblendschaltung 13 angeschlossen ist. Die Verzögerungsleitung 3, die zweiten Verbindungsleitungen 7b, die Trennverstärker 11b und der zweite Multiplexer 9b bilden eine zweite Teilschaltung 2B, die ausgangsseitig ebenfalls an die Überblendschaltung 13 angeschlossen ist. Die Überblendschaltung 13 schaltet abwechselnd den Ausgang des ersten und zweiten Multiplexers 9a bzw. 9b an ihren Ausgang 15 weiter. Dieses Umschalten geschieht vorzugsweise "weich", wie noch näher erläutert wird.

Das von dem Ultraschall-Wandlerelement 1 empfangene Ultraschall-Echosignal liegt mit n unterschiedlichen Zeitverzögerungswerten $T_1$, $T_2$, ... $T_i$, $T_j$, ... $T_n$ an den einzelnen Abgriffen 5 an. Beim Empfang einer Ultraschallzeile wird das Ultraschall-Echosignal über den ersten Multiplexer 9a an die Überblendschaltung 13 weitergegeben. Diese befindet sich z. B. zu Beginn des Empfangs in einem ersten Zeitabschnitt bezüglich des ersten Multiplexers 9a in einem durchgeschalteten Zustand, so daß das Ultraschall-Echosignal an den Ausgang 15 zur weiteren Verarbeitung gelangt. Während dieses ersten Zeitabschnitts, in dem mit einer Fokuslage I z. B. entsprechend der Verzögerungszeit $T_1$ aufgenommen wird, wird der zweite Multiplexer 9b umgeschaltet und bereits auf die nächste, d. h. die zweite Fokuslage II vorbereitet. Dabei wird z. B. der zweite Abgriff mit der Verzögerungszeit $T_2$ entsprechend der zweiten Fokuslage II vom zweiten Multiplexer 9b an den zweiten Eingang der Überblendschaltung 13 gelegt. Entsprechend einem später noch näher erläuterten Funktionsverlauf wird während des ersten, dritten, fünften Zeitabschnitts von der Überblendschaltung 13 vom Eingang des ersten Multiplexers 9a kontinuierlich auf den Eingang des zweiten Multiplexers 9b übergeblendet. Ist dieser Überblendvorgang abgeschlossen, so liegt am Ausgang 15 das Ultraschall-Echosignal an, welches am ebenso durchgeschalteten zweiten Eingang des zweiten Multiplexers 9b anliegt. In diesem Zustand der Zeitverzögerungsschaltung 2 wird also über die zweite Teilschaltung 2B die Verzögerung der Ultraschall-Echosignale mit $T_2$ vorgenommen.

Im anschließenden zweiten Zeitabschnitt wird die erste Teilschaltung 2A durch Umschalten des ersten Multiplexers 9a, z. B. auf die Verzögerungszeit $T_3$ auf die Einstellung zur Verarbeitung der dritten Fokuslage III vorbereitet.

Ist der Wirkungsbereich der zweiten Fokuslage II mit der Zeitverzögerung $T_2$ abgelaufen, so wird von der Überblendschaltung 13 wiederum weich auf ihren ersten Eingang, an welchem der erste Multiplexer 9a mit Einstellung der Zeitverzögerung $T_3$ liegt, umgeschaltet, und es wird von dort der weitere Empfang des Ultraschall-Echosignals übernommen. Dieser Vorgang des wechselseitigen Umschaltens wiederholt sich, bis alle gewünschten Fokuslagen I, II, III, ... durchlaufen sind. Dieses ist in Fig. 1a anhand des Übertragungsverhaltens der Überblendschaltung 13 bezüglich ihres ersten und zweiten Eingangs verdeutlicht.

Vorteil dieser Vorgehensweise ist, daß keine Zeit durch die Umschaltung der Multiplexer 9a, 9b verloren geht. Die Umschaltung erfolgt jeweils dann, wenn die betreffende Teilschaltung 2A, 2B nicht aktiviert ist. Diese Zeitersparnis ist bei der Bereitstellung vieler Fokuslagen, z. B. bei zehn oder mehr Fokuslagen I, III, ... X, von erheblicher Bedeutung. Als weiterer wesentlicher Vorteil ergibt sich, daß durch die Anordnung der Trennverstärker 11a, 11b in den Verbindungsleitungen 7a bzw. 7b keine Schaltimpulse oder -knacke rückwärts zur Verzögerungsleitung 3 gelangen. Diese Schaltknackse entstehen vorliegend nur dann, wenn der betroffene Multiplexer 9a, 9b im nichtaktivierten Zustand umgeschaltet wird. Es ist also möglich, für jede einzelne Ultraschallzeile ein schaltknacksfreies, verzögertes Ultraschall-Echosignal zu erhalten und aus den Echosignalen dieser Zeilen in konventioneller Weise ein Bild zusammenzusetzen.

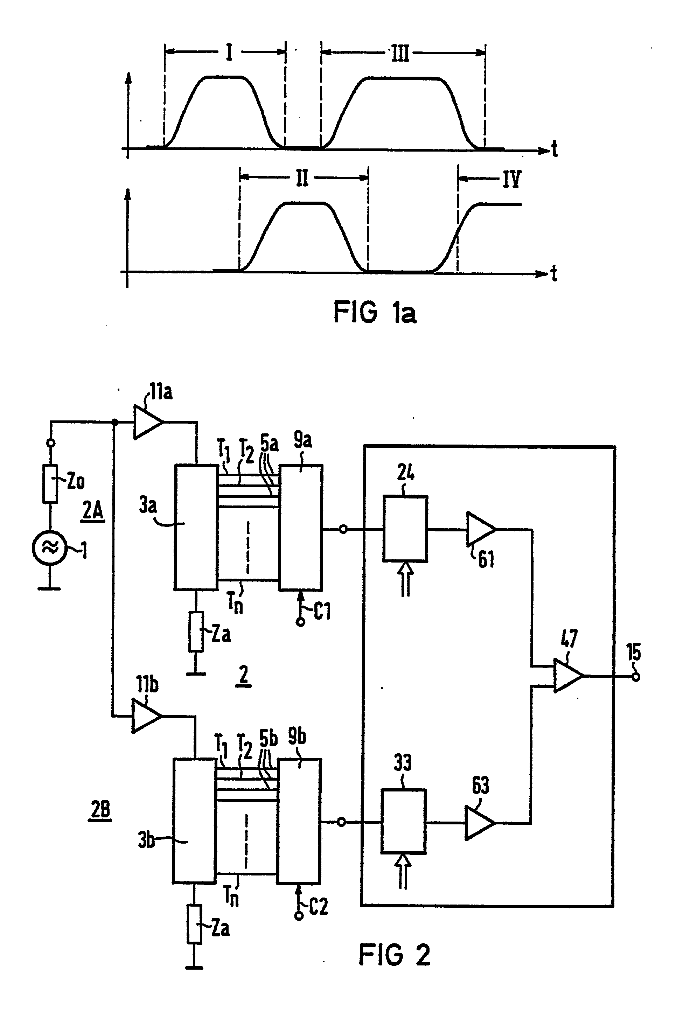

Fig. 2 zeigt eine zweite Ausführungsform einer Zeitverzögerungsschaltung 2, mit welcher dieselben funktionstechnischen Vorteile erzielt werden können. Gleiche Bauteile sind mit gleichen Bezugszeichen versehen. Ein Ultraschall-Wandlerelement 1 mit Innenwiderstand Zo speist über einen ersten Impedanzwandler oder Trennverstärker 11a das Ultraschall-Echosignal in eine erste Verzögerungsleitung 3a mit Abschlußwiderstand Za ein. Die Verzögerungsleitung 3a weist eine Anzahl n Abgriffe 5a auf, denen jeweils ein Zeitverzögerungswert $T_1$, $T_2$, ... $T_n$ zugeordnet ist. Es gilt auch hier wieder für be-

liebige benachbarte Abgriffe $T = T_j - T_i$. Die Abgriffe 5a sind einzeln mit den Eingängen auf der Eingangsseite eines ersten Multiplexers 11a verbunden. Entsprechend der Zahl n der Abgriffe 5a weist der Multiplexer 11a n Eingänge auf. Der Multiplexer 11a schaltet nach Maßgabe eines Steuersignals C1 jeweils einen der Eingänge auf seinen Ausgang. Dieser ist mit dem ersten Eingang einer Überblendschaltung 13 verbunden. Der erste Trennverstärker 11a, die erste Verzögerungsleitung 3a und der erste Multiplexer 11a bilden eine erste Teilschaltung 2A für die Zeitverzögerung des Ultraschall-Echosignals. Analog hierzu ist eine zweite Teilschaltung 2B aufgebaut, die aus den Elementen zweiter Trennverstärker 11b, zweite Verzögerungsleitung 3b und zweiter Multiplexer 11b besteht. Die zweite Teilschaltung 2B ist zwischen den zweiten Eingang der Überblendschaltung 13 und das Ultraschall-Wandlerelement 1 geschaltet. Die Funktionsweise des wechselweisen Überblendens der ersten auf die zweite Teilschaltung 2A bzw. 2B und umgekehrt, ist bei dieser Ausführungsform mit der bei Fig. 1 beschriebenen Funktionsweise identisch. Vorteil ist es, daß hier nicht 2n Trennverstärker vorgesehen sind, was bei einer hohen Anzahl n sehr aufwendig wäre. Es sind hier insgesamt nur zwei Trennverstärker 11a, 11b jeweils vor der Vorzögerungsschaltung 3a, 3b eingesetzt, um zu verhindern, daß Schaltknackse auf die jeweils aktivierte Teilschaltung 2A, 2B gelangen. Der zusätzliche Aufwand einer zweiten Verzögerungsleitung 3b wird dabei als Kompromiß in Kauf genommen.

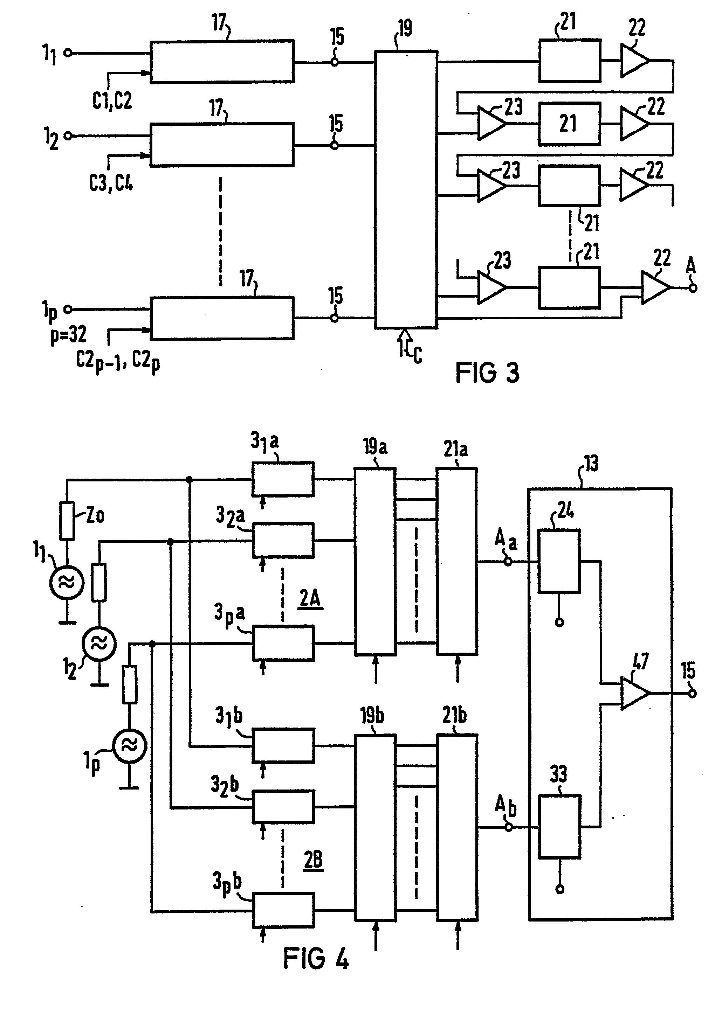

In Fig. 3 ist ein Beispiel gezeigt, wie die mit Hilfe der Figuren 1 oder 2 beschriebene Zeitverzögerungsschaltung 2 zur Einstellung der Krümmung in einem Phased-Array-Gerät eingesetzt werden kann. Gleiche Bauelemente sind wiederum mit gleichen Bezugszeichen versehen. In der Fig. 3 ist eine Zahl p von z. B. p = 32 Empfangskanälen eines Phased-Array-Gerätes dargestellt. Von dem Ultraschall-Wandlerelement 1 des ersten Empfangskanals gelangt das Ultraschall-Echosignal zu einer dynamischen Fokussiereinrichtung 17, die entsprechend der Kombination aus Verzögerungsschaltung 2 und Überblendschaltung 13 nach der vorher beschriebenen Figur 1 oder 2 aufgebaut ist. Die dynamische Fokussiereinrichtung 17 würde demnach gemäß Fig. 1 aus den Bauelementen Verzögerungsleitung 3, Verbindungsleitungen 7a, 7b, Trennverstärker 11a, 11b, Multiplexer 9a, 9b und Überblendschaltung 13 bestehen. Gemäß der Fig. 2 würde die dynamische Fokussiereinrichtung 17 aus den Bauelementen Trennverstärker 11a, 11b, Verzögerungsleitung 3a, 3b, Verbindungsleitung 5a, 5b, Multiplexer 9a, 9b und Überblendschaltung 13 bestehen. Der mit 15 bezeichnete Ausgang der Überblendschaltung 13 in den Fig. 1 und 2 ist in Fig. 3 ebenfalls dargestellt. Die Verzögerungsleitung 3 innerhalb der dynamischen Fokussiereinrichtung 17 hat dabei einen maximalen Wert von z. B. $T_n = 500$ nsec. Für jedes der p Ultraschall-Elemente $1_1, 1_2, \ldots 1_p$ des Ultraschall-Arrays ist ein gleichartiger Empfangskanal mit gleichartig aufgebauter Fokussiereinrichtung 17 vorgesehen. Alle p = 32 Einrichtungen 17 bilden zusammen den jeweiligen Empfangsfokus des Arrays.

In jedem Empfangskanal ist der Ausgang 15 der Überblendschaltung 13 ist an den zugeordneten Eingang eines Multiplexers 19 gelegt. Der Multiplexer 19 weist also entsprechend der Anzahl der Empfangskanäle p Eingänge auf. Der Multiplexer 19, gesteuert über ein Ansteuersignal C, übersetzt die Anzahl der Eingänge p auf eine vorgebbare Anzahl m von Ausgängen. Dies geschieht nach einer vorgegebenen, dem Anwendungsfall angepaßten Funktion, was auf dem Gebiet der Phased-Arrays bekannt ist.

Der erste der m Ausgänge des Multiplexers 19 ist an eine erste Verzögerungsleitung 21 angeschlossen, welche über einen Trennverstärker 22 an einen Addierer 23 führt. Mit Hilfe des Addierers 23 wird das verzögerte Ultraschall-Echosignal, welches am zweiten Ausgang des Multiplexers 19 anliegt, zum ersten verzögerten Ausgangssignal hinzuaddiert und zusammen mit diesem einen zweiten Verzögerungsleitung 21 zugeführt, die dem zweiten Ausgang zugeordnet ist. Diese Vorgehensweise wiederholt sich, bis am (m-1)-ten Ausgang des Multiplexers 19 die letzte Verzögerungsleitung 21 durchlaufen wird. Deren Ausgang wird zusammen mit dem unverzögerten Ausgangssignal des m-ten Ausgangs dem (m-1)-ten Trennverstärker 22 zugeführt. Diese nacheinander durchlaufene Reihe von Verzögerungsleitungen 21 weist am letzten Trennverstärker 22 einen Ausgang A auf, an welchem für einen bestimmten Krümmungszustand des Arrays (durch die Fokussiereinrichtungen 17 vorgegeben) und für einen bestimmten Schwenkwinkel des Arrays (durch die Verzögerungsleitungen 21 vorgegeben) die Ultraschall-Echosignale abgegriffen werden. Die Verzögerungsleitung 21 dient also der Einstellung des Schwenkwinkels für das Phased-Array. Größenordnungsmäßig liegt die Summe der Verzögerungszeiten aller Verzögerungsleitungen 21 im Bereich zwischen 5 und 20 μs, z. B. bei 7 μs.

In Fig. 4 ist ein Ausführungsbeispiel beschrieben, bei welchem - abweichend von Fig. 3 - die Zeitverzögerungsschaltung der Gesamtverzögerung doppelt vorgesehen ist. Mit Gesamtverzögerung wird hierbei sowohl die Zeitverzögerung verstanden, die zur dynamischen Fokussierung über die Krümmung des Arrays dient, als auch diejenige, die zur elektronischen Festlegung der Schwenkrichtung dient. Gemäß der Fig. 4 sind von jedem Ultraschall-Element $1_1, 1_2 \ldots 1_p$ sämtliche Komponenten der Zeitverzögerungsschaltung doppelt aufgebaut. Dies ist durch Bezugszeichen verdeutlicht. Eine jede Teilschaltung 2A, 2B besteht demnach jeweils aus einer Verzögerungsleitung $3_1a, 3_2a, \ldots 3_pa$ für die Feinverzögerung, einem ersten Multiplexer 19a mit Übersetzungsverhältnis p : m und einer ersten Grobverzögerungsleitung 21a. Der Gesamtausgang Aa der Zeitverzögerungsschaltung 2A ist jetzt an den ersten Eingang der Überblendschaltung 13 geführt. Entsprechendes gilt für die Elemente der Teilschaltung 2B. Mit dieser Ausführungsform kann gezeigt werden, daß die genannten Vorteile auch bei der Grobverzögerung zur Erzielung des Schwenks bei einem Phased-Array erzielt werden können.

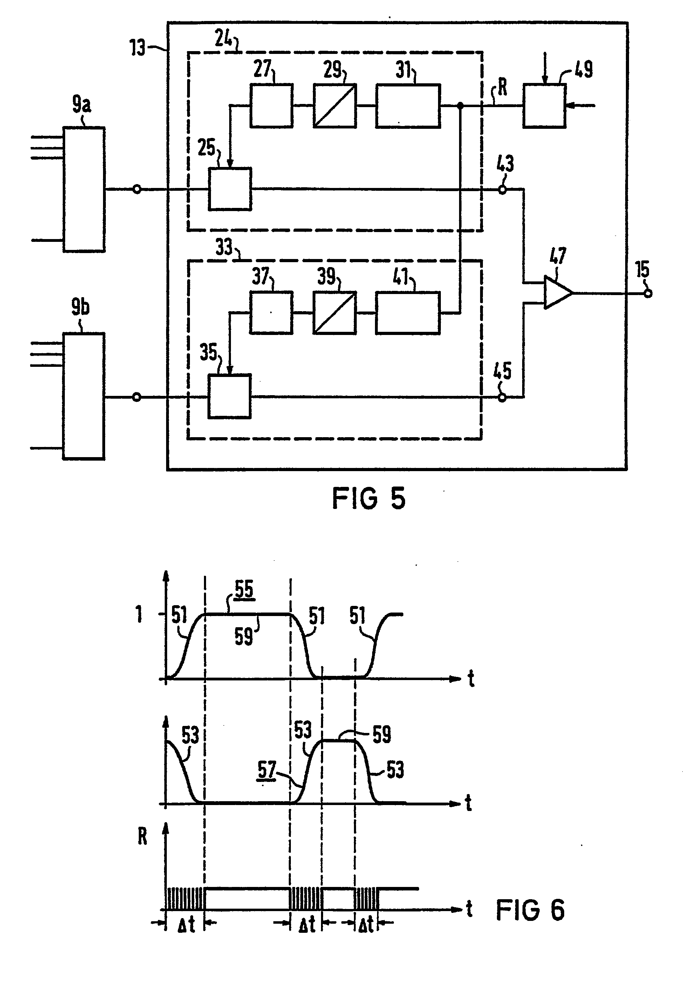

In Fig. 5 ist ein Ausführungsbeispiel der Überblendschaltung 13 dargestellt. Dieses kann in Fig. 1, 2 oder 4 eingesetzt werden, wird aber nur für Fig. 1 und 2 beschrieben. Der Ausgang des Multiplexers 9a ist an den Eingang eines ersten kontinuierlich steuerbaren Tores 24 gelegt, welches aus einem ersten Analog-Steuerglied 25, z. B. einem Transistor steuerbarem Verstärker oder Multiplizierer mit Ansteuerschaltung aus einem ersten Tiefpaßfilter 27, einem ersten Digital-Analog-Wandler 29 und einem ersten PROM 31 besteht.

Der Ausgang der zweiten Multiplexers 9b ist an den Eingang eines zweiten kontinuierlich steuerbaren Tores 33 gelegt, welches aus einem zweiten Analog-Steuerglied 35, z. B. wieder einem Transistor, mit Ansteuerschaltung aus einem zweiten Tiefpaßfilter 37, einem zweiten Digital-Analog-Wandler 39 und einem zweiten PROM 41 besteht. Das erste und das zweite Tor 24, 33 weisen jeweils einen Torausgang 43 bzw. 45 auf, welche an die beiden Eingänge eines Summationsgliedes 47 gelegt sind. Der Ausgang des Summationsgliedes 47 ist mit dem Ausgang 15 der Überblendschaltung 13 aus den Fig. 1 und 2 identisch.

Das erste und zweite Tor 24, 33 sind mit ihrer Ansteuerschaltung an einen Taktgeber 49 angeschlossen. Über diesen kann ein Start- oder Stoppsignal von der Steuereinrichtung 14 des Ultraschallgeräts an die Tore 24, 33 gegeben werden.

In dem ersten und dem zweiten PROM 31, 41 ist eine erste bzw. zweite Überblendfunktion 51, 53 eingespeichert, vgl. Fig. 6. Die Überblendfunktionen 51, 53 sind so gewählt, daß sie jeweils komplementär zueinander sind. Unter komplementär wird dabei verstanden, daß sich die beiden Überblendfunktionen 51, 53 zu einem vorgebbaren Wert, z. B. zu 1, ergänzen. Weist die erste Überblendfunktion 51 beispielsweise einen sinusquadratförmigen Verlauf auf, so ist die zweite Überblendfunktion 53 mit einem kosinusquadratförmigen Verlauf zu wählen. Es kommen auch andere geeignete Überblendfunktionen, wie z. B. die Hamming- oder Hanningfunktion oder aber andere Fensterfunktionen in Frage. Wichtig bei der Wahl der Überblendfunktionen 51, 53 ist, daß die eine jeweils auf Null entsprechend dem Ausblendzustand der Überblendschaltung 13 gesunken ist, wenn die andere Funktion ihren maximalen Wert für den Durchlaßzustand des Tores 24, 33 erreicht hat. Es soll also abwechselnd von dem ersten Tor 24 auf das zweite Tor 33 übergeblendet werden, und umgekehrt. Es sei darauf hingewiesen, daß die erste Überblendfunktion 51 und die zweite Überblendfunktion 53 jeweils nur beim Umschalten auf eine andere Fokuslage ihren bestimmungsmäßigen Überblendverlauf aufweisen. Wird bei konstanter Fokuslage im Wirkungsbereich einer zugeordneten Fokuslage I, II, III, ... das Ultraschall-Echosignal empfangen, so bleiben die Tore 24, 33 jeweils in ihrer durchgeschalteten bzw. gesperrten Stellung. Dieser Sachverhalt ist deutlich in Fig. 6 dargestellt.

Es ist zweckmäßig, gemäß Fig. 1 das Summationsglied 47 als Verstärker auszulegen. Außerdem kann es sinnvoll sein, wie in Fig. 2 gezeigt, jeweils zwischen dem ersten und dem zweiten Tor 24, 33 einerseits und dem Summationsglied 47 andererseits einen weiteren Trennverstärker 61 bzw. 63 vorzusehen.

In Fig. 6 sind untereinander drei Signalverläufe in Abhängigkeit von der Zeit t eingezeichnet. Bei dem ersten Signalverlauf handelt es sich um eine erste Torfunktion 55, wie sie am Steuereingang des ersten Tores 24 abliegt. Der zweite Verlauf entspricht einer zweiten Torfunktion 57, wie er am Steuereingang des zweiten Tores 33 anliegt. Der dritte Verlauf zeigt an, in welchen Zeitperioden Δt Taktsignale R vom Taktgeber 49 an das erste und zweite PROM 31 und 41 gegeben wird.

Die erste Torfunktion 55 setzt sich zusammen aus Überblendfunktionen 51 und geraden Kurvenverläufen 59. Letztere kommen zustande, wenn das Taktsignal R nicht mehr an das PROM 31 geliefert wird. Diese geraden Kurvenverläufe 59 liegen immer dann vor, wenn innerhalb einer vorgegebenen Fokuslage I, II, III, ... der über den zugeschalteten Eingang des zugeordneten Multiplexers 11a festgelegt ist, Echosignale empfangen werden. Je nach dem, ob die erste Teilschaltung 2A dann aktiviert ist oder nicht, wird der gerade Kurvenverlauf 59 bei dem Wert 1 oder aber bei dem Wert Null liegen. Die Längen des garaden Kurvenverlaufes 59 können unterschiedlich gewählt sein, da auch der Wirkungsbereich der verschiedenen Fokuslagen ungleich lang sein kann.

Wie aus Fig. 6 ersichtlich, ist der zweite Verlauf, der die zweite Torfunktion 57 darstellt, zusammengesetzt aus der Überblendfunktion 53 und wiederum geraden Kurvenverläufen 59. Wichtig ist, daß während der geraden Kurvenverläufe 59 die beiden Torfunktionen 55, 57 entgegengesetztes Durchschaltverhalten zeigen. Ist die eine auf dem maximalen Wert, z. B. 1, muß die andere den Wert Null annehmen und umgekehrt. In den Überblendphasen mit Δt, in welchen die Torfunktion 55, 57 durch die in den PROMS 31, 41 eingespeicherten Überblendfunktionen 51 bzw. 53 bestimmt sind, weisen die Überblendfunktionen 51, 53 einen gegenläufigen Verlauf auf. Steigt die erste Überblendfunktion 51 weich (z. B. entsprechend einer Sinusquadratfunktion) an, so fällt die zweite Überblendfunktion 53 nach einem kosinusquadratförmigen Verlauf ab.

Das Komplement der beiden Übergangsfunktionen 51, 53 bleibt dabei erhalten. Es findet so ein weiches Überblenden von dem ersten Tor 24 mit vorgeschalteter erster Teilschaltung 2A zum zweiten Tor 33 mit vorgeschalteter zweiter Teilschaltung 2B statt, und umgekehrt. Wie bereits erwähnt, sollte das Überblenden möglichst weich verlaufen, um einen günstigen Frequenzgang des Umschaltvorganges bezüglich des Frequenzbandes des verzögerten Echosignals zu erhalten. Das beim Umschaltvorgang entstehende Frequenzspektrum des Umschaltimpulses sollte nach Möglichkeit vollständig außerhalb des Frequenzbandes der Echosignale liegen.

Im folgenden wird ein Ausführungsbeispiel beschrieben, bei welchem eine vorgebbare Zahl, z. B. vier, von Empfangskanälen für jede Teilschaltung zusammengefaßt ist.

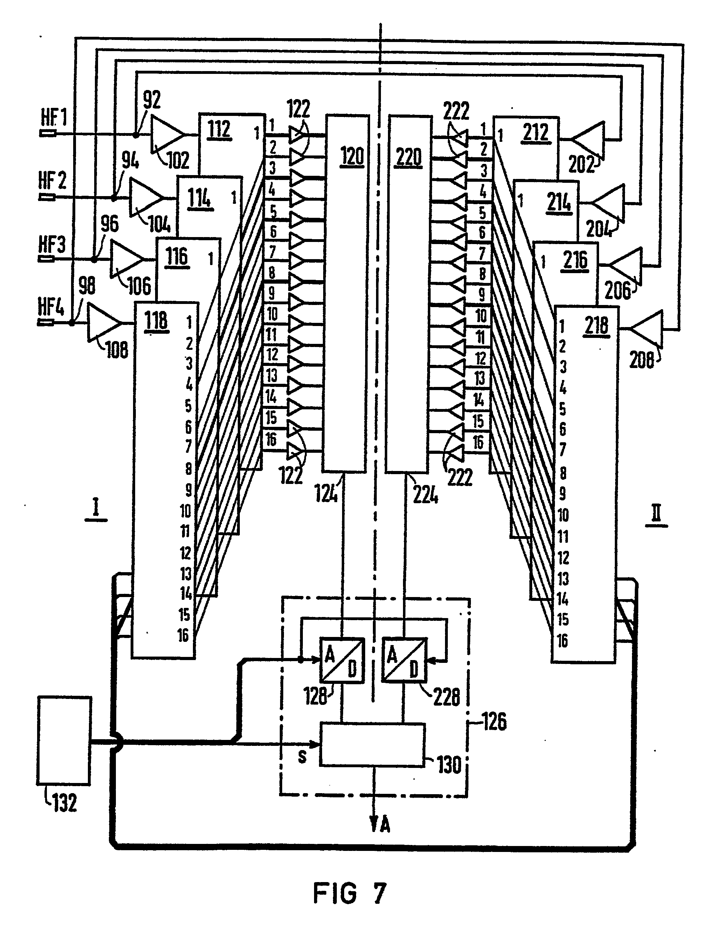

In Fig. 7 sind vier Empfangskanäle HF1 bis HF4 eines medizinischen Ultraschallgeräts dargestellt, das mit einem Array von Ultraschall-Wandlerelementen arbeitet. Die Empfangskanäle HF1 bis HF4 sind zu jedem Zeitpunkt einer Gruppe von vier Wandlerelementen zugeordnet, wodurch die Signale dieser vier Wandlerelemente phasenkorrigiert aufsummiert werden können. Diese Technik eignet sich sowohl für Phased- als auch für Linear-Arrays. Innerhalb einer Gruppe von vier benachbarten Wandlerelementen sind die zu korrigierenden Phasenunterschiede so klein, daß z. B. 500 ns zur Korrektur genügen. Verbleibende Phasenunterschiede von Gruppe zu Gruppe werden mit diesem Verfahren während einer Abtastzeile konstant gehalten, so daß eine dynamische Änderung entfällt.

Ist bei Anwendung dieser Technik auf Linear-Arrays die Anzahl der Wandlerelemente größer als die Anzahl der HF-Kanäle, betragen die Zahlen z. B. 128 bzw. 64, dann kann in an sich bekannter Weise die durch die HF-Kanäle gebildete Apertur durch schrittweises Fortschalten entlang der Wandlerelemente bewegt werden.

Von den Wandlerelementen werden nach dem Senden Ultraschall-Echosignale erzeugt. Um die Ultraschall-Echosignale auch aus unterschiedlichen Tiefen des untersuchten Objekts, d. h. des Patienten, gleich gut empfangen zu können, ist die erwähnte sogenannte dynamische Fokussierung notwendig. Bei der dynamischen Fokussierung werden die von verschiedenen Ultraschall-Wandlerelementen gelieferten Ultraschall-Echosignale jeweils auf elektronischem Wege mit vorbestimmten Zeitverzögerungswerten verzögert, also tiefenabhängig der sogenannten elektronischen Fokussierung unterworfen. Die vorgegebenen Zeitverzögerungswerte sind für unterschiedliche Fokuslagen oder Fokustiefen unterschiedlich. Um also in einer Empfangszeile von einer Fokuslage in die nächste Fokuslage zu gelangen, muß eine Umschaltung in der Zeitverzögerungsschaltung vorgenommen werden. Eine solche Umschaltung erzeugt in der Regel Spikes, die auf dem dargestellten Bild als Störungen sichtbar sind.

Anhand der Gruppe der vier Empfangskanäle HF1 bis HF4 wird im folgenden erläutert, wie solche Störungen durch Spikes verhindert werden. Dazu weist jeder Empfangskanal HF1 bis HF4 einen Knotenpunkt 92 bis 98 auf, von welchem je eine Verbindung zu zwei identischen Teilschaltungen I und II führt. Jeder der restlichen (64 - 4) = 60 Empfangskanäle ist entsprechend in einer Vierergruppe zusammengefaßt, die mit zwei eigenen identischen Teilschaltungen verbunden ist, denen vorgegebene Verzögerungszeiten im Laufe der Fokussierung zugeordnet werden.

Von den Knotenpunkten 92 bis 98 führt jeweils eine Verbindung zu einem Trennverstärker 102, 104, 106 und 108 in der ersten Teilschaltung I und eine Verbindung zu einem Trennverstärker 202, 204, 206 und 208 in der zweiten Teilschaltung II. Der Ausgang jedes Trennverstärkers 102 bis 108 und 202 bis 208 ist jeweils mit dem Eingang eines vierteiligen analogen Multiplexers 112, 114, 116, 118 bzw. 212, 214, 216, 218 verbunden. Jeder Teilmultiplexer 112, 114, 116, 118 sowie 212, 214, 216 und 218 ist z. B. als 1 : 16 Multiplexer im Handel erhältlich. Je vier Teilmultiplexer sind ausgangsseitig parallel geschaltet.

Der analoge Multiplexer 112 bis 118 sowie 212 bis 218 besitzt jeweils so viele Ausgänge, wie eine nachgeschaltete aufsummierende erste bzw. zweite Verzögerungsleitung 120 bzw. 220 Eingänge besitzen kann. Ansonsten muß eine Auswahl getroffen werden. Vorliegend sind z. B. jeweils 16 Eingänge vorgesehen. Zwischen jedem Ausgang des Multiplexers 112 bis 118 sowie 212 bis 218 und dem betreffenden Eingang der zugeordneten Verzögerungsleitung 120 bzw. 220 ist jeweils ein Verstärker 122 bzw. 222 zwischengeschaltet, der die Anpassung an die Verzögerungsleitung realisiert.

In jeder Verzögerungsleitung 120, 220 werden die an den Eingängen anliegenden Ultraschall-Echosignale entsprechend dem Verzögerungswert des jeweiligen Einganges verzögert. Somit stehen am Ausgang 124 und 224 der betreffenden Verzögerungsleitung 120 bzw. 220 die verzögerten Echosignale als Ultraschall-Summensignale zur Verfügung.

Die beiden Ausgänge 124, 224 sind an eine Überblendschaltung 126 beschaltet. Die Überblendschaltung 126 weist einen Ausgang A auf, an welchem je nach dem Schaltzustand entweder das Ultraschall-Summensignal des Ausgangs 124 der ersten Teilschaltung I oder aber das Ultraschall-Summensignal des Ausgangs 224 der zweiten Teilschaltung II zur Verfügung steht. Das jeweils anliegende Summensignal wird in bekannter Weise weiterverarbeitet und auf einem Bildschirm (nicht gezeigt) zur Darstellung gebracht.

Die Überblendschaltung 126 umfaßt für jede Teilschaltung I, II einen Analog-Digital-Wandler 128 bzw. 228 sowie einen gemeinsamen digitalen Multiplexer 130. Das Summensignal der ersten Teilschaltung I wird vom Ausgang 124 der ersten Verzögerungsleitung 120 zu dem ersten Analog-Digital-Wandler 128 geführt. Dort wird es in ein digitales Summensignal umgewandelt und einem ersten Eingang des digitalen Multiplexers 130 zugeführt. Analog hierzu wird das Summensignal der zweiten Teilschaltung II von dem Ausgang 224 der zweiten Verzögerungsleitung 220 zu dem Ausgang des zweiten Analog-Digital-Wandlers 228 geführt. Dessen Ausgang ist an einen zweiten Eingang des digitalen Multiplexers 130 gelegt. Der digitale Multiplexer 130 schaltet je nach vorliegendem Ansteuersignals entweder den ersten oder den zweiten Eingang auf seinen Ausgang A durch. Dieses Umschalten erfolgt frei von Spikes, so daß Bildstörungen vermieden werden.

Eine zentrale Steuereinheit 132 ist mit jedem der analogen Multiplexer 112 bis 118 und 212 bis 218, mit den beiden Analog-Digital-Wandlern 128, 228 und dem digitalen Multiplexer 130 verbunden. Die zentrale Steuereinheit 132 liefert jedem Steuereingang der analogen Multiplexer 112 bis 118 und 212 bis 218 die Information, auf welche vier der 16 Ausgänge seine vier Eingänge durchgeschaltet sein sollen.

Wie bereits erwähnt, liegt an jedem Knotenpunkt 92 bis 98 jeweils ein Ultraschall-Echosignal an, und zwar am Knotenpunkt 92 das Ultraschall-Echosignal vom Empfangskanal HF1, am Knotenpunkt 94 dasjenige vom Empfangskanal HF2 u.s.w.. Das Ultraschall-Echosignal des Empfangskanals HF1 liegt nach seiner Verstärkung durch den Trennverstärker 102 und 202 an je einem Eingang der analogen Teilmultiplexer 112 bzw. 212 an. Diesen Trennverstärkern 102, 202 mit hoher Rückwärtsdämpfung kommt die wesentliche Aufgabe zu, die bei der Umschaltung der analogen Multiplexer entstehenden Spikes von den Knotenpunkten 92 bis 98 fernzuhalten. D. h., daß eine Umschaltung der analogen Multiplexer in der ausgeblendeten Teilschaltung zu keinen Bildstörungen durch Spikes in der zugeblendeten Teilschaltung führen kann. Der Eingang des analogen Teilmultiplexers 112 ist durch die Information von der zentralen Steuereinheit 132 beispielsweise an den ersten Ausgang 1 gelegt. Dies ist in Fig. 1 durch fette Strichstärke am ersten Ausgang 1 angedeutet. Jeder Multiplexer 112 bis 118 und 212 bis 218 weist, wie erwähnt, z. B. 16 Ausgänge auf, die jeweils mit einem der 16 Eingänge der zugehörigen Verzögerungsleitung 120 bzw. 220 verbunden sind. Die Eingänge sind durchnumeriert von 1 bis 16.

In analoger Weise sind die Empfangskanäle HF2, HF3 und HF4 über die zugeordneten Teil-Multiplexer 114, 116 bzw. 118 der ersten Teilschaltung I z. B. an den dritten, fünften bzw. achten Ausgang des Multiplexers 112 bis 118 und damit an den entsprechenden Eingang der ersten Verzögerungsleitung 120 gelegt. Dieses ist wieder durch fette Strichstärke in Fig. 1 angedeutet. Die Aktivierung des ersten, dritten, fünften und achten Ausgangsdes ersten Multiplexers 112 bis 118 bedeutet Empfang in einer vorgegebenen Fokuslage, z. B. in einer neunten Fokuslage.

Bei der zweiten Teilschaltung II sind die Empfangskanäle HF1 bis HF4 ebenfalls an entsprechend vier Eingänge der zweiten Verzögerungsleitung 220 gelegt. Allerdings ist von der zentralen Steuereinheit 132 eine Durchschaltung auf andere vier Eingänge als bei der ersten Verzögerungsleitung 120 vorgenommen worden. Diese Eingänge sind z. B., wie wieder durch fette Strichstärke angedeutet, bei der zweiten Verzögerungsleitung 220 die Eingänge 2, 4, 6 und 9. Die den Eingängen 2, 4, 6 und 9 der zweiten Verzögerungsleitung 220 zugeführten Echosignale werden demnach mit anderen Zeitverzögerungswerten beaufschlagt, was bei der erwähnten elektronischen Fokussierung einer anderen vorgegebenen Fokuslage entspricht.

In der Verzögerungsleitung 120 der ersten Teilschaltung I werden die Ultraschall-Echosignale entsprechend ihrem zugeschalteten Eingang unterschiedlich verzögert. Beträgt die Verzögerungszeit der Verzögerungsleitung 120 z. B. insgesamt 500 ns und sind die 16 Eingänge in gleiche Verzögerungszeitabschnitte von 500 ns : 16 = 31,25 ns eingeteilt, so wird das am Eingang 1 anliegende Ultraschall-Echosignal des Empfangskanals HF1 mit ca. 500 ns verzögert, das am Eingang 3 anliegende Ultraschall-Echosignal des Empfangskanals HF2 mit ca. 438 ns, das am fünften Eingang anliegende Ultraschall-Echosignal des Empfangskanals HF3 mit ca. 375 ns und das am achten Eingang anliegende Ultraschall-Echosignal des Empfangskanals HF4 mit ungefähr 281 ns. Die entsprechenden Werte bei dem dargestellten Schaltzustand der zweiten Teilschaltung II, bei der die Verzögerungsleitung 220 wieder eine maximale Verzögerung, z. B. von 500 ns besitzt lauten 469 ns, 406 ns, 344 ns bzw. 250 ns.

Am Ausgang 124 der ersten Verzögerungsleitung 120 liegen die aufsummierten Ultraschall-Echosignale als erstes Ultraschall-Summensignal an. Dieses Ultraschall-Summensignal ist dabei unter Berücksichtitung einer durch die Steuereinheit 132 festgelegten m-ten Fokuslage zustande gekommen. Das am Ausgang 224 der zweiten Verzögerungsleitung 220 anliegende Ultraschall-Summensignal ist dabei unter Berücksichtigung einer (m+1)-ten Fokuslage, welche zweckmäßigerweise zur ersten benachbart ist und dieser in Tiefenrichtung unmittelbar folgt, zustandegekommen.

Soll am Ausgang A vom Ultraschall-Summensignal der Teilschaltung I übergeblendet werden auf das Ultraschall-Summensignal der Teilschaltung II, so ist der digitale Multiplexer 130 von der zentralen Steuereinheit 132 entsprechend umzuschalten. Nach dem Umschalten liegt also nicht mehr der erste Eingang mit Anschluß der Teilschaltung I, sondern der zweite Eingang mit Anschluß der Teilschaltung II am Ausgang A an. Dieses Umschalten von der Fokuslage m auf (m+1) erfolgt, wie bereits erwähnt, ohne die störenden Spikes, welche sonst zu Bildstörungen führen.

Unmittelbar nach diesem Umschaltvorgang, wenn also die Teilschaltung II noch aktiviert ist, werden die Teil-Multiplexer 112 bis 118 der ersten Teilschaltung I auf eine neue Fokuslage (m+2) umgestellt oder umgeschaltet. Dazu werden von der zentralen Steuereinheit 132 die Eingänge der Teil-Multiplexer 112 bis 118 mit anderen Ausgängen verbunden. Beispielsweise ist dann der Teil-Multiplexer 112 mit seinem dritten Ausgang an den dritten Eingang der Verzögerungsleitung 120, der Teil-Multiplexer 114 mit seinem fünften Ausgang an den fünften Eingang der Verzögerungsleitung 120, der Teil-Multiplexer 116 mit seinem siebten Ausgang an den siebten Eingang der Verzögerungsleitung 120 und der Teil-Multiplexer 118 mit seinem zehnten Ausgang an den zehnten Eingang der Verzögerungsleitung 120 gelegt. Die sich daraus ergebende Fokuslage (m+2) ist gegenüber dem Betriebszustand der jetzt noch aktivierten Teilschaltung verschoben.

Dieser Vorgang wiederholt sich wechselweise, bis in einer Empfangszeile sämtliche gewünschten Empfangsfokuslagen 1,2 m, (m+1), (m+2) durchgefahren worden sind. In den vorgeschalteten zw. nachgeschalteten Baugruppen wird nun in der Zeilenaustastlücke auf die nächste Sende- und Empfangszeile umgeschaltet. Auf diese Weise kann mit vergleichsweise geringem Aufwand eine Ultraschalaufnahme mit dynamischer Fokussierung erzielt werden, welche im wesentlichen frei von Schaltknacksen ist. Eine grobe Aperturabschaltung kann auf einfache Weise durch Abschalten einer der beiden Analog-Digital-Wandler realisiert werden.

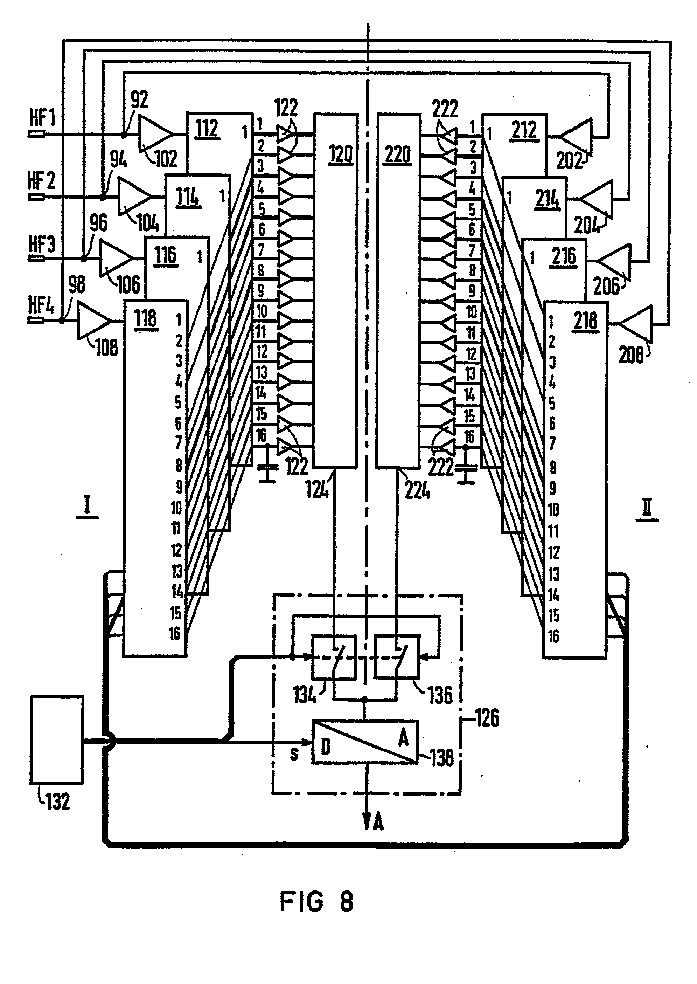

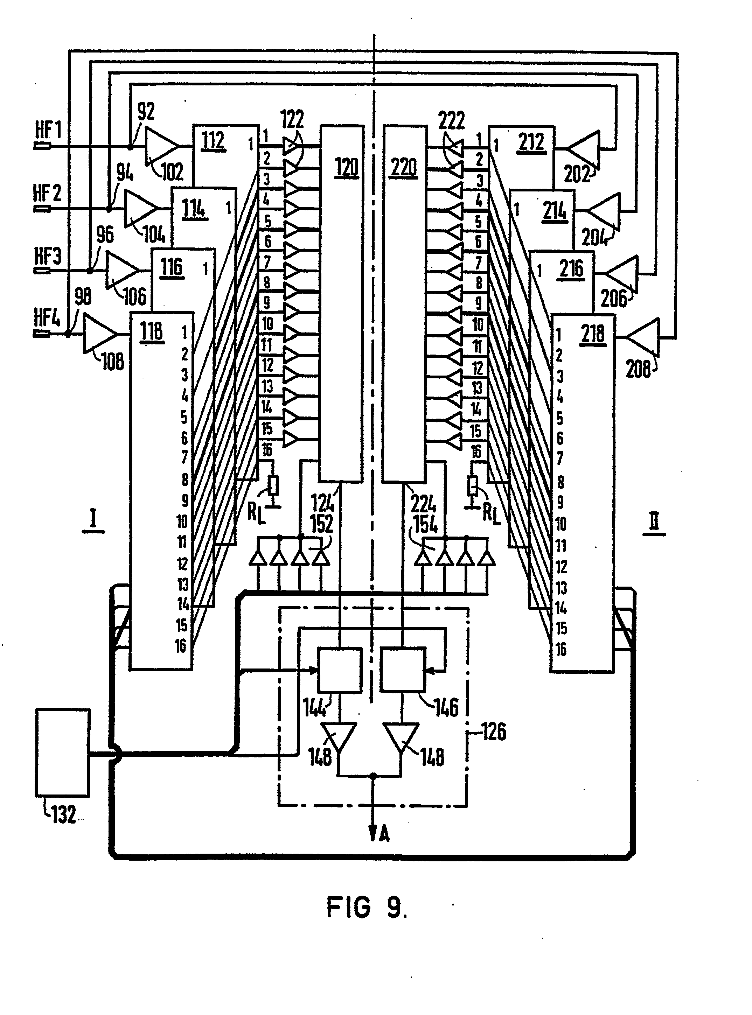

In der Fig. 8 und 9 sind gleiche Bauteile mit gleichen Bezugzeichen versehen wie in Fig. 7. Der Gegenstand nach der Fig. 8 und 9 unterscheidet sich von demjenigen gemäß Fig. 7 zum einen in der Überblendschaltung 126 und in einer Ausgestaltung der Schaltung zur Aperturabschaltung (Aperturumschaltung) des Ultraschallarrays.

Die Aperturabschaltung wird in einfacher Weise dadurch erreicht, daß das von einem Ultraschallelement herrührende Ultraschall-Echosignal, das bei der Signalverarbeitung nicht gewünscht ist, vor der Verzögerungsleitung 120 bzw. 220 HF-mäßig kurzgeschlossen wird. Dazu wird der Ausgang des Trennverstärkers 122 von der zentralen Steuereinheit 132 an HF-Masse gelegt.

In Fig. 8 ist lediglich eingezeichnet, daß der Eingang Nr. 16 auf HF-Masse gelegt werden kann.

In Fig. 8 ist die Überblendschaltung 126 durch einen ersten und einen zweiten schnellen Schalter 134 bzw. 136 sowie einen nachgeschalteten Analog-Digital-Wandler 138 realisiert. Das Ultraschall-Summensignal der ersten Teilschaltung I ist auf den ersten Kontakt des ersten schnellen Schalters 134 gelegt. Entsprechend ist das Ultraschall-Summensignal der zweiten Teilschaltung II auf den ersten Kontakt des zweiten schnellen Schalters 136 geführt. Der zweite Kontakt beider schneller Schalter 134, 136 ist jeweils an den Eingang des Analog-Digital-Wandlers 138 angeschlossen. Die beiden Schalter 134, 136 arbeiten gegensinnig. Das bedeutet, daß die zentrale Steuereinheit 132 den ersten Schalter 134 schließt, wenn sie den zweiten Schalter 136 öffnet, und umgekehrt. Es befindet sich also jeweils einer der beiden Schalter 134, 136 in geschlossenem Zustand und der andere in geöffnetem Zustand.

Die schnellen Schalter 134, 136 weisen je einen Steuereingang auf, welcher mit der zentralen Steuereinheit 132 verbunden ist. Desgleichen ist der Analog-Digital-Wandler 138 mit der zentralen Steuereinheit 132 verbunden.

In der Steuereinheit 132 werden die Schalter 134, 136 jeweils dann umgeschaltet, wenn der Analog-Digital-Wandler 138 gerade eine Austastlücke aufweist. Die beim Schalten auftretende Spannungsspitze ("Spike") ist so kurz, daß sie in die Abtastlücke des Analog-Digital-Wandlers 138 hineinfällt. Die Werte der Ultraschallabtastung vor und nach dem Umschalten der Schalter 134, 136 bleiben also vom Schaltvorgang unbeeinflußt. Am Ausgang A des Analog-Digital-Wandlers 138 liegt das jeweilige Ultraschall-Summensignal also spikefrei an.

In Fig. 9 ist die Überblendschaltung 126 durch Tore 144 und 146, die als abschwächbare Verstärker ausgeführt sind, sowie nachgeschaltete Summierverstärker aufgebaut. Das Ultraschall-Summensignal der ersten Teilschaltung I ist auf den ersten abschwächbaren Verstärker 144 geführt; entsprechend ist das Ultraschall-Summensignal der zweiten Teilschaltung II auf den zweiten abschwächbaren Verstärker 146 gelegt. Beide Tore 144, 146 können spikefrei über spezielle Umschaltfunktionen von der zentralen Steuereinrichtung 132 gegensinnig aus- bzw. eingeblendet werden. Die beiden nachgeschalteten Verstärker 148, 150 übernehmen nur noch die Summation beider Signale.

Die Aperturabschaltung wird hier erreicht, indem der Ausgang 16 des analogen Multiplexers 112,212 angewählt wird. Der Ausgang 16 ist über einen Lastwiderstand $R_L$ an Masse gelegt. Der Wert des Lastwiderstands $R_L$ hat dieselbe Größenordnung wie der Wert des Eingangswiderstands der Anpaßverstärker 122,221. Die Trennverstärker 102 bis 108 und 202 bis 208 sind immer durch dieselbe Last beaufschlagt; es tritt also kein Lastwechselsprung auf. Des weiteren wird über die zentrale Steuereinheit 132 bei Aperturabschaltung ein Anpaßverstärker 152,154 zugeschaltet, über den keine Ultraschall-Information läuft. Diesem Anpaßverstärker 152,154 kommt die Aufgabe der Stabilisierung des Arbeitspunktes der übrigen Anpaßverstärker 122,222 zu, d. h. es werden dadurch Störungen vermieden, die durch plötzlichen Wegfall einer HF-Einspeisung entstehen.

**Patentansprüche**

1. Ultraschallgerät zur dynamischen Veränderung der Empfangsfokuslage einer vorgebbaren Anzahl an Ultraschall-Wandlerelementen (1), wobei jedem Ultraschall-Wandlerelement (1; $1_1$, $1_2$, ... $1_p$) ein Empfangskanal mit einer Zeitverzögerungsschaltung (2) für das empfangene Ultraschall-Echosignal nachgeschaltet ist, und wobei die Zeitverzögerungsschaltung (2) zur Umschaltung zwischen verschiedenen vorgegebenen Zeitverzögerungswerten ($T_1$, $T_2$, ... $T_u$) mit einer Steuereinrichtung (14) verbunden ist, **dadurch gekennzeichnet,** daß zumindest ein Teil der Zeitverzögerungsschaltung (2) doppelt vorgesehen ist, so daß eine erste und eine zweite Teilschaltung (2A, 2B) zur Bildung des zeitverzögerten Ultraschall-Echosignals vorliegen, und daß eine Überblendschaltung (13) vorgesehen ist, die dafür sorgt, daß

a) die zweite Teilschaltung (2B) jeweils dann im Empfangskanal eingeblendet ist, wenn die erste, sich im ausgeblendeten Zustand befindliche Teilschaltung (2A) von der Steuereinrichtung (14) auf einen anderen Zeitverzögerungswert ($T_i$) umgeschaltet wird, und

b) die erste Teilschaltung (2A) jeweils dann im Empfangskanal eingeblendet ist, wenn die zweite, sich im ausgeblendeten Zustand befindliche Teilschaltung (2B) von der Steuereinrichtung (14) auf einen anderen Zeitverzögerungswert ($T_j$) umgeschaltet wird.

2. Ultraschallgerät nach Anspruch 1, **dadurch gekennzeichnet,** daß die gesamte Zeitverzögerungsschaltung (2A, 2B) doppelt vorgesehen ist (Fig. 4).

3. Ultraschallgerät nach Anspruch 1, **dadurch gekennzeichnet,** daß die erste und die zweite Teilschaltung (2A, 2B) jeweils eine Verzögerungsleitung (3a, 3b) mit mehreren Abgriffen (5a, 5b) und jeweils einen Multiplexer (9a, 9b) enthalten, dessen Eingangsseite mit den Abgriffen (5a, 5b) der zugeordneten Verzögerungsleitung (3a, 3b) und dessen Ausgangsseite mit der Überblendschaltung (13) verbunden ist (Fig. 2).

4. Ultraschallgerät nach Anspruch 1, **dadurch gekennzeichnet,** daß die erste und die zweite Teilschaltung (2A, 2B) jeweils einen Multiplexer (9a, 9b) enthalten, dessen Eingangsseite mit den Abgriffen (5) einer beiden Multiplexern (9a, 9b) gemeinsamen Verzögerungsleitung (3) und dessen Ausgangsseite mit der Überblendschaltung (13) verbunden ist. (Fig. 1).

5. Ultraschallgerät nach Anspruch 4, **dadurch gekennzeichnet,** daß vor jedem Eingang an der Eingangsseite der Multiplexer (9a, 9b) ein Trennverstärker (11a, 11b) vorgesehen ist (Fig. 1).

6. Ultraschallgerät nach Anspruch 3, **dadurch gekennzeichnet,** daß jeder Verzögerungsleitung (3a, 3b) ein Trennverstärker (11a, 11b) vorgeschaltet ist (Fig. 2).

7. Ultraschallgerät nach einem der Ansprüche 1 bis 6, **dadurch gekennzeichnet,** daß die Überblendschaltung (13) ein erstes und ein zweites steuerbares Tor (24, 33) beinhaltet, wobei das erste Tor (24) an den Ausgang der ersten Teilschaltung (2A) und das zweite Tor (33) an den Ausgang der zweiten Teilschaltung (2B) angeschlossen ist, und daß der Ausgang des ersten und des zweiten Tors (24, 33) an die Eingänge eines Summationsgliedes (47) gelegt sind.

8. Ultraschallgerät nach Anspruch 7, **dadurch gekennzeichnet,** daß jeweils zwischen dem ersten und dem zweiten Tor (24, 33) einerseits und dem Summantionsglied (47) andererseits ein Trennverstärker (61, 63) vorgesehen ist (Fig. 2).

9. Ultraschallgerät nach Anspruch 7, **dadurch gekennzeichnet,** daß die beiden Tore (24, 33) an den Eingang eines Verstärkers angeschlossen sind, der als Summationsglied (47) vorgesehen ist.

10. Ultraschallgerät nach einem der Ansprüche 7 bis 9, **dadurch gekennzeichnet,** daß das erste steuerbare Tor (24) ein erstes PROM (31) mit einer ersten abgespeicherten Torfunktion (55) und das zweite Tor (33) ein zweites PROM (41) mit einer zweiten abgespeicherten Torfunktion (57) umfaßt, und daß jedem PROM (31, 41) über einen Digital-Analog-Wandler (29 bzw. 39) der Steuereingang eines Analog-Steuergliedes (25 bzw. 35) nachgeschaltet ist.

11. Ultraschallgerät nach Anspruch 10, **dadurch gekennzeichnet,** daß die erste Torfunktion (55) das Einserkomplement zur zweiten Funktion (57) ist.

12. Ultraschallgerät nach Anspruch 10, **dadurch gekennzeichnet,** daß die erste Überblendfunktion (51) einen sinusförmigen Verlauf aufweist.

13. Ultraschallgerät nach einem der Ansprüche 7 bis 12, **dadurch gekennzeichnet,** daß jedes steuerbare Tor (24, 33) ein Tiefpaßfilter (27 bzw. 37) umfaßt.

14. Ultraschallgerät nach einem der Ansprüche 1 bis 13, **dadurch gekennzeichnet,** daß es als Phased-Array-Gerät ausgeführt ist, worin die Zeitverzögerungsschaltung (2) zur Festlegung der elektronischen Krümmung und/oder des Schwenks des Arrays vorgesehen ist.

15. Ultraschallgerät nach einem der Ansprüche 1 bis 14, **dadurch gekennzeichnet,** daß die erste und die zweite Teilschaltung (I, II) eine erste bzw. zweite aufsummierende Verzögerungsleitung (120, 220) mit jeweils mehreren Eingängen aufweisen, wobei jedem Eingang eine vorgegebene Verzögerungszeit zugeordnet ist, daß jeder Empfangskanal (HF1 bis HF64) aus einer vorbestimmten Anzahl an Empfangskanälen (HF1 bis HF64) nach Wahl mit einem beliebigen Eingang der beiden Verzögerungsleitungen (120, 220) verbindbar ist, so daß am Ausgang (124, 224) jeder der beiden Verzögerungsleitungen (120, 220) die Ultraschall-Echosignale (HF1 bis HF64) der vorbestimmten Empfangskanäle (HF1 bis HF64) nach der Zeitverzögerung als ein Ultraschall-Summensignal zur Verfügung stehen, und daß jeweils das Ultraschall-Summensignal der ersten und zweiten Teilschaltung (I, II) der Überblendschaltung (126) zugeführt ist.

16. Ultraschallgerät nach Anspruch 15, **dadurch gekennzeichnet,** daß jeder Empfangskanal (HF1 bis HF64) ausgangsseitig über einen Trennverstärker (102 bis 108, 202 bis 208) an den Eingang eines analogen Multiplexers (112 bis 118, 212 bis 218) gelegt ist, der mehrere Ausgänge aufweist, und daß jeder Ausgang des Multiplexers (112 bis 118, 212 bis 218) mit einem ihm zugeordneten Eingang der Verzögerungsleitung (120, 220) über einen Anpaßverstärker (122, 222) verbunden ist.

17. Ultraschallgerät nach Anspruch 15 oder 16, **dadurch gekennzeichnet,** daß zur Aperturabschaltung zumindest einer der Ausgänge des Multiplexers (112 bis 118, 212 bis 218) an HF-Masse gelegt ist.

18. Ultraschallgerät nach einem der Ansprüche 1 bis 17, **dadurch gekennzeichnet,** daß das Ultraschall-Summensignal der ersten Verzögerungsleitung (120) auf einen ersten Analog-Digital-Wandler (128) geführt ist, daß das Ultraschall-Summensignal der zweiten Verzögerungsleitung (220) auf einen zweiten Analog-Digital-Wandler (228) geführt ist, und daß der Ausgang des ersten und des zweiten Analog-Digital-Wandlers (128, 228) an den ersten bzw. zweiten Eingang dines digitalen Multiplexers (130) geschaltet ist, so daß die beiden Analog-Digital-Wandler (128, 228) und der digitale Multiplexer (130) die Überblendschaltung (126) bilden.

19. Ultraschallgerät nach einem der Ansprüche 1 bis 17, **dadurch gekennzeichnet,** daß das Ultraschall-Summensignal der ersten Verzögerungsleitung (120) auf einen ersten schnellen Schalter (l34) und das Ultraschall-Summensignal der zweiten Verzögerungsleitung (220) auf einen zweiten schnellen Schalter (136) geführt sind, daß die Ausgänge der beiden Schalter (134, 136) gemeinsam auf den Eingang eines Analog-Digital-Wandlers (138) geführt sind, und daß eine Steuerungseinrichtung (132) vorgesehen ist, die die beiden Schalter (134, 136) innerhalb einer Austastlücke des Analog-Digital-Wandlers (138) gegensinnig betätigt.

## Claims

1. Ultrasound apparatus for the dynamic variation of the position of the receiving focus of a selectable number of ultrasound transducer elements (1), a receiving channel with a time-delay circuit (2) for the received ultrasound echo signal being connected downstream to each ultrasound transducer element (1; $1_1$, $1_2$, ... $1_p$), and the time-delay circuit (2) being connected to a control device (14) for switching among various pre-determined values of time

delay ($T_1$, $T_2$, ... $T_u$), characterised in that at least a part of the time-delay circuit (2) is provided in duplicate, so that a first and a second sub-circuit (2A, 2B) are present for forming the time-delayed ultrasound echo signal, and in that a cross-fading circuit (13) is provided which ensures that:

a) the second sub-circuit (2B) is then faded in on the receiving channel each time that the first sub-circuit (2A), which is in the faded out state, is switched by the control device (14) to another time delay value ($T_i$), and

b) the first sub-circuit (2A) is faded in on the receiving channel each time that the second sub-circuit (2B), which is in the faded out state, is switched by the control device (14) to another time delay value ($T_j$).

2. Ultrasound apparatus according to claim 1, characterised in that the entire time-delay circuit (2A, 2B) is provided in duplicate (Figure 4).

3. Ultrasound apparatus according to claim 1, characterised in that the first and second sub-circuits (2A, 2B) each contain a time-delay line (3a, 3b) with several taps (5a, 5b) and a multiplexer (9a, 9b), the input side of which is connected to the taps (5a, 5b) of the time-delay line (3a, 3b) assigned thereto, and the output side of which is connected to the cross-fading circuit (13) (Figure 2).

4. Ultrasound apparatus according to claim 1, characterised in that the first and second sub-circuits (2A, 2B) each contain a multiplexer (9a, 9b), the input side of which is connected to the taps (5) of a time-delay line (3) common to both multiplexers (9a, 9b), and the output side of which is connected to the cross-fading circuit (13) (Figure 1).

5. Ultrasound apparatus according to claim 4, characterised in that an isolation amplifier (11a, 11b) is provided before each input on the input side of the multiplexer (9a, 9b) (Figure 1).

6. Ultrasound apparatus according to claim 3, characterised in that an isolation amplifier (11a, 11b) is connected upstream to each time-delay line (3a, 3b) (Figure 2).

7. Ultrasound apparatus according to one of claims 1 to 6, characterised in that the cross-fading circuit (13) contains a first and a second controllable gate (24, 33), the first gate (24) being connected to the output of the first sub-circuit (2A), and the second gate (33) being connected to the output of the second sub-circuit (2B), and in that the outputs of the first and second gates (24, 33) are connected across the inputs of a summation element (47).

8. Ultrasound apparatus according to claim 7, characterised in that an isolation amplifier (61, 63) is provided in each case between the first and second gates (24, 33) on the one hand, and between the first gate (24) and the summation element (47) on the other hand (Figure 2).

9. Ultrasound apparatus according to claim 7, characterised in that the two gates (24, 33) are connected to the input of an amplifier which is provided as a summation element (47).

10. Ultrasound apparatus according to one of claims 7 to 9, characterised in that the first controllable gate (24) comprises a first PROM (31) with a first stored gate function (55), and the second gate (33) comprises a second PROM (41) with a second stored gate function (57), and in that the control input of an analog control element (25 and 35 respectively) is connected downstream to each PROM (31, 41) by way of an analog-to-digital converter (29 and 39 respectively).

11. Ultrasound apparatus according to claim 10, characterised in that the first gate function (55) is the ones complement of the second function (57).

12. Ultrasound appartus according to claim 10, characterised in that the first cross-fading function (51) has a sinusoidal character.

13. Ultrasound apparatus according to one of claims 7 to 12, characterised in that each controllable gate (24, 33) comprises a low-pass filter (27 and 37 respectively).

14. Ultrasound apparatus according to one of claims 1 to 13, characterised in that it is designed as a phased array apparatus in which the time-delay circuit (2) is provided for defining the electronic curvature and/or swing of the array.

15. Ultrasound apparatus according to one of claims 1 to 14, characterised in that the first and second sub-circuits (I, II) have respectively a first and a second summing time-delay line (120, 230), each with several inputs, a pre-determined time delay being assigned to each input, in that each receiving channel (HF1 to HF64), consisting of a pre-determined number of receiving channels (HF1 to HF64), can be connected according to choice to any input of the two time-delay lines (120, 220), so that, at the output (124, 224) of each of the two time-delay lines (120, 220), the ultrasound echo signals (HF1 to HF64) of the predetermined receiving channels (HF1 to HF64) are available after the time delay as an ultrasound summation signal, and in that the ultrasound summation signal of the first and second sub-circuit (I, II) is fed in each case to the cross-fading circuit (126).

16. Ultrasound apparatus according to claim 15, characterised in that each receiving channel (HF1 to HF64) is connected on the output side by way of an isolating amplifier (102 to 108, 202 to 208) across the input of an analog multiplexer (112 to 118, 212 to 218) which has several outputs, and in that each output of the multiplexer (112 to 118, 212 to 218) is connected by way of a matching amplifier (122, 222) to an input of the time-delay line (120, 220) assigned to the said multiplexer.

17. Ultrasound apparatus according to claim 15 or 16, characterised in that, for the aperture disconnection, at least one of the outputs of the multiplexer (112 to 118, 212 to 218) is returned to HF earth.

18. Ultrasound apparatus according to one of claims 1 to 17, characterised in that the ultrasound summation signal of the first time-delay line (120) is led to a first analog-to-digital converter (128), and in that the ultrasound summation signal of the second time-delay line (220) is led to a second analog-to-digital converter (228), and in that the output of the first and the second analog-to-digital converter (128, 228) is switched to the first and second input (respectively) of a digital multiplexer (130), so that the two analog-to-digital converters (128, 228) and the digital multiplexer (130) form the cross-fading circuit (126).

19. Ultrasound apparatus according to one of claims 1 to 17, characterised in that the ultrasound summation signal of the first time-delay line (120) is led to a first fast switch (134), and the ultrasound summation signal of the second time-delay line (220) is led to a second fast switch (136), and in that the outputs of the two switches (134, 136) are led together to the input of an analog-to-digital converter (138), and in that a control device (132) is provided which actuates the two switches (134, 136) in opposite directions within a blanking gap of the analog-to-digital converter (138).

**Revendications**

1. Appareil à ultrasons pour réaliser la modification dynamique de la position du foyer de réception d'un nombre, pouvant être prédéterminé, d'éléments transducteurs à ultrasons (1), dans lequel en aval de chaque élément transducteur à ultrasons (1;1₁, 1₂, ...1ₚ) est branché un canal de réception comportant un circuit de retardement (2) pour les signaux d'échos ultrasonores reçus, et dans lequel le circuit de retardement (2) est relié à un dispositif de commande (14) pour réaliser la commutation entre différentes valeurs prédéterminées de retards (T₁, T₂, ...Tᵤ), caractérisé par le fait qu'au moins une partie du circuit de retardement (2) est prévue en double de sorte qu'il existe des premier et second circuits partiels (2A, 2B) servant à former le signal d'écho ultrasonore retardé et qu'il est prévu un circuit de commande de transition (13), qui veille à ce que

a) le second circuit partiel (2B) est inséré dans le canal de réception lorsque le premier circuit partiel (2A) situé à l'état occulté est commuté par le dispositif de commande (14) sur une autre valeur de retard (Tᵢ), et

b) le premier circuit partiel (2A) est inséré dans le canal de réception lorsque le second circuit partiel (2B) situé à l'état occulté est commuté par le dispositif de commande (14) sur une autre valeur de retard (Tⱼ).

2. Appareil à ultrasons suivant la revendication 1, caractérise par le fait que la totalité du circuit de retardement (2A, 2B) est prévue en double (figure 4).

3. Appareil à ultrasons suivant la revendication 1, caractérisé par le fait que les premier et second circuits partiels (2A, 2B) contiennent respectivement une ligne à retard (3a, 3b) comportant plusieurs prises (5a, 5b) et respectivement un multiplexeur (9a, 9b) dont le côté entrée est relié aux prises (5a, 5b) de la ligne à retard associée (3a, 3b) et dont le côté sortie est relié au circuit de commande de transition (13) (figure 2).

4. Appareil à ultrasons suivant la revendication 1, caractérisé par le fait que les premier et second circuits partiels (2A, 2B) contiennent respectivement un multiplexeur (9a, 9b), dont le côté entrée est relié aux prises (5) d'une ligne à retard (3) commune aux deux multiplexeurs (9a, 9b) et dont le côté sortie est relié au circuit de commande de transition (13). (Figure 1).

5. Appareil à ultrasons suivant la revendication 4, caractérisé par le fait qu'un amplificateur séparateur (11a, 11b) est prévu en amont de chaque entrée, sur le côté entrée du multiplexeur (9a, 9b) (figure 1).

6. Appareil à ultrasons suivant la revendication 3, caractérisé par le fait qu'un amplificateur séparateur (11a, 11b) est branché en amont de chaque ligne à retard (3a, 3b) (figure 2).

7. Appareil à ultrasons suivant l'une des revendications 1 à 6, caractérisé par le fait que le circuit de commande de transition (13) contient des première et seconde portes commandables (24, 33), la première porte (24) étant raccordée à la sortie du premier circuit partiel (2A) et la seconde porte (33) étant raccordée à la sortie du second circuit partiel (2B), et que la sortie des première et seconde portes (24, 33) est raccordée aux entrées d'un circuit additionneur (47).

8. Appareil à ultrasons suivant la revendication 7, caractérisé par le fait qu'un amplificateur séparateur (61, 63) est prévu respectivement entre les première et seconde portes (24, 33) d'une part et le circuit additionneur (47) d'autre part (figure 2).

9. Appareil à ultrasons suivant la revendication 7, caractérisé par le fait que les deux portes (24, 33) sont raccordées à l'entrée d'un amplificateur, qui est prévu en tant que circuit additionneur (47).

10. Appareil à ultrasons suivant l'une des revendications 7 à 9, caractérisé par le fait que la première porte commandable (24) comporte une première mémoire PROM (31) possédant une première fonction de porte mémorisée (55), que la seconde porte (33) comporte une seconde mémoire PROM (41) possédant une seconde fonction de porte mémorisée (57), et que l'entrée de commande d'un circuit de commande analogique (25 ou 35) est branchée en aval de chaque mémoire PROM (31, 41), par l'intermédiaire d'un convertisseur numérique/analogique (29 ou 39).

11. Appareil à ultrasons suivant la revendication 10, caractérisé par le fait que la première fonction de porte (55) est le complément à un de la seconde fonction (57).

12. Appareil à ultrasons suivant la revendication 10, caractérisé par le fait que la première fonction de transition (51) possède une variation sinusoïdale.

13. Appareil à ultrasons suivant l'une des revendications 7 à 12, caractérisé par le fait que chaque porte commandable (24, 33) comporte un filtre passe-bas (27 ou 37).

14. Appareil à ultrasons suivant l'une des revendications 1 à 13, caractérisé par le fait qu'il est réalisé sous la forme d'un appareil à réseau piloté en phase, le circuit de retardement (2) étant prévu pour fixer la courbure électronique et/ou le pivotement du réseau.

15. Appareil à ultrasons suivant l'une des revendications 1 à 14, caractérisé par le fait que les premier et second circuits partiels (I, II) comportent des première et seconde lignes à retard (120, 220) effectuant une sommation et comportant chacune plusieurs entrées, à chacune desquelles est associé un retard prédéterminé, que chaque canal de réception (HF1 à HF64) faisant partie d'un nombre prédéterminé de canaux de réception (HF1 à HF64) peut être relié au choix à une entrée quelconque des deux lignes à retard (120, 220), de sorte que sur la sortie (124, 224) de chacune des deux lignes à retard (120, 220), les signaux d'échos ultrasonores (HF1 à HF64) des canaux de réception prédéterminés (HF1 à HF64) sont disponibles, après le retardement, sous la forme d'un signal somme ultrasonore et que respectivement le signal somme ultrasonore des premier et second circuits partiels (I, II) est envoyé au circuit de commande de transition (126).

16. Appareil à ultrasons suivant la revendication 15, caractérisé par le fait que chaque canal de réception (HF1 à HF64) est raccordé, côté sortie, par l'intermédiaire d'un amplificateur séparateur (102 à 108, 202 à 208), à l'entrée d'un multiplexeur analogique (112 à 118, 212 à 218), qui comporte plusieurs sorties, et que chaque sortie du multiplexeur (112 à 118, 212 à 218) est reliée à une entrée, qui lui est associée, de la ligne à retard (120, 220) par l'intermédiaire d'un amplificateur d'adaptation (122, 222).

17. Appareil à ultrasons suivant la revendication 15 ou 16, caractérisé par le fait que pour l'interruption de l'ouverture, au moins l'une des sorties du multiplexeur (112 à 118, 212 à 218) est raccordée à la masse pour la haute fréquence.

18. Appareil à ultrasons suivant l'une des revendications 1 à 17, caractérisé par le fait que le signal somme ultrasonore de la première ligne à retard (120) est envoyé à un premier convertisseur analogique/numérique (128), que le signal somme ultrasonore de la seconde ligne à retard (200) est envoyé à un second convertisseur analogique/numérique (228) et que les sorties des premier et second convertisseurs analogique/numérique (128, 228) sont raccordées respectivement aux première et seconde entrées d'un multiplexeur numérique (130), de sorte que les deux convertisseurs analogique/numérique (128, 228) et le multiplexeur numérique (130) forment le circuit de commande de transition (126).

19. Appareil à ultrasons suivant l'une des revendications 1 à 17, caractérisé par le fait que le signal somme ultrasonore de la première ligne à retard (120) est envoyé à un premier interrupteur rapide (134) et que le signal somme ultrasonore de la seconde ligne à retard (220) est envoyé à un second interrupteur rapide (136), que les sorties des deux interrupteurs (134, 136) sont raccordées en commun à l'entrée d'un convertisseur analogique/numérique (138), et qu'il est prévu un dispositif de commande (132), qui actionne les deux interrupteurs (134, 136) pendant un intervalle de suppression du convertisseur analogique/numérique (138).

FIG 1

FIG 1a

FIG 2

FIG 3

FIG 4

FIG 5

FIG 6

FIG 7

FIG 8

FIG 9.